(19) **Europäisches Patentamt / European Patent Office / Office européen des brevets**

(11) **EP 2 543 424 A1**

(12) **EUROPEAN PATENT APPLICATION**
published in accordance with Art. 153(4) EPC

(43) Date of publication:
**09.01.2013 Bulletin 2013/02**

(51) Int Cl.:
**B01D 45/12** (2006.01)    **B01D 19/00** (2006.01)
**B01D 45/02** (2006.01)    **G01F 1/74** (2006.01)

(21) Application number: **11750854.9**

(22) Date of filing: **07.03.2011**

(86) International application number:
**PCT/JP2011/055248**

(87) International publication number:
**WO 2011/108746 (09.09.2011 Gazette 2011/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2010 JP 2010049416**

(71) Applicant: **Japan Oil, Gas and Metals National Corporation**
**Minato-ku, Tokyo 105-0001 (JP)**

(72) Inventors:
• **SUDA, Tomoko**
  **Chiba-shi**
  **Chiba 261-0025 (JP)**

• **KAWAI, Michihiro**
  **Kobe-shi**
  **Hyogo 651-2225 (JP)**
• **IKEDA, Kenji**
  **Kawasaki-shi**
  **Kanagawa 210-0854 (JP)**

(74) Representative: **KATZAROV S.A.**
**European Patent Attorneys**
**19, rue des Epinettes**
**1227 Genève (CH)**

(54) **GAS-LIQUID SEPARATOR AND FLOW RATE MEASUREMENT DEVICE**

(57)    A gas-liquid separator (1) is configured so that the inner side surface of a body section (13) and the outer side surface of an inner pipe (50) are concentric when viewed from above, an inlet pipe (20) extending toward the center axis of the body section (13) when viewed from above, a guide plate (60) including a guide plate side section (61) that extends in a non-horizontal direction, and a guide plate lower section (62) that extends in a non-vertical direction and is continuous with the guide plate side section (61), the guide plate side section (61) being at least disposed on the inner side surface of the body section (13) at a position on one side of an inlet opening (132), or on the outer side surface of the inner pipe (50) at a position on one side of an area opposite to the inlet opening (132), the guide plate lower section (62) being at least disposed on the outer side surface of the inner pipe (50) at a position directly under an area opposite to the inlet opening (132) and along the outer side surface of the inner pipe (50) when viewed from above, and a space (100) being at least partially formed between the guide plate lower section (62) and the body section (13).

FIG.1

EP 2 543 424 A1

**Description**

TECHNICAL FIELD

The present invention relates to a high-performance and small gas-liquid separator, and a multiphase flow rate measurement device using the same. In particular, the invention relates to a gas-liquid separator that separates a gas-liquid multiphase fluid obtained from an oilfield (i.e., a gas-liquid multiphase fluid that includes gas, crude oil, and water) into gas and liquid, and a multiphase flow rate measurement device using the same.

BACKGROUND ART

Fluid after being removed from an oilfield contains crude oil, gas (e.g., methane, ethane, butane, and pentane), and water (e.g., salt water). The fluid may also contain solid (e.g., sand). In order to efficiently transport crude oil via a tanker or a pipeline, it is indispensable to separate the fluid into gas, water, and crude oil, and determine the each flow rate.

In the petroleum industry, gas has been separated using a separation-tank type gas-liquid separator that utilizes the buoyancy of gas. The separation-tank type gas-liquid separator is slowly supplied crude oil to. Because the separation-tank type gas-liquid separator is a large-capacity tank, there is a sufficient residence time during which the gas is separated from the liquid. Therefore, the separation-tank type gas-liquid separator has a large volume, is heavy, and requires a large installation area. These requirements can be met when the gas-liquid separator is used on shore. However, when the gas-liquid separator is used at an offshore platform which has a limited deck space, it is very important to reduce the dimensions and the weight of the gas-liquid separator. Moreover, the separation-tank type gas-liquid separator increases costs.

In order to deal with this problem, a cyclone gas-liquid separator has been proposed that implements gas-liquid separation by utilizing the difference in centrifugal force obtained when the multiphase flow of gas and liquid is rotated. Specifically, the cyclone gas-liquid separator makes a gas-liquid multiphase fluid flow along the inner wall of a vertical cylinder to produce a centrifugal force. Then the cyclone gas-liquid separator makes liquid fall downward along the inner wall of the vertical cylinder due to gravity, and be separated from gas. The cyclone gas-liquid separator thus has a reduced weight and requires a small installation area as compared with a separation-tank type gas-liquid separator.

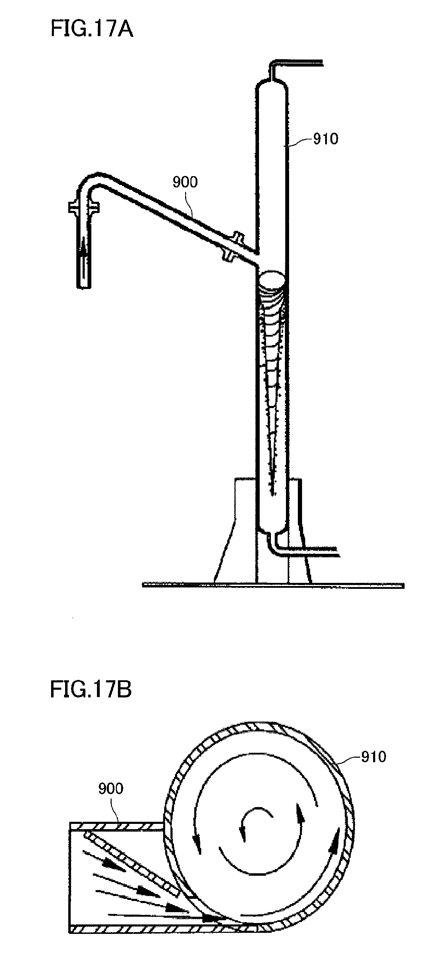

G. Joel Rodger, "Multiphase Flow Measurement Class 8110" (Colorado Experiment Engineering Station Inc.) (Non-patent Document 1) discloses a typical cyclone gas-liquid separator. FIG. 17A is a cross-sectional view illustrating the meridian cross section of the gas-liquid separator according to the related art disclosed in Non-patent Document 1, and FIG. 17B is a horizontal cross-sectional view illustrating the gas-liquid separator according to the related art disclosed in Non-patent Document 1. As illustrated in FIG. 17A, an inlet pipe 900 is inclined downward, and connected to a vertical cylinder 910. As illustrated in FIG. 17B, the inlet pipe 900 is attached to the vertical cylinder 910 in the tangential direction. This structure adds a centrifugal force to a gas-liquid multiphase fluid supplied to the inlet pipe 900. Liquid is guided downward (flows downward) along the inner wall of the vertical cylinder 910, and removed. On the other hand, gas is moved to the center of the cyclone, and removed from the upper side of the vertical cylinder 910. The multiphase flow undergoes phase separation due to the downward inclination of the inlet pipe 900, so that gas-liquid separation by cyclone is more efficient.

The gas-liquid separator disclosed in Non-patent Document 1 exhibits excellent performance within a specific flow rate range. However, the separation efficiency deteriorates when the flow rate is outside the above range. This makes it impossible to prevent a situation in which liquid is incorporated in the separated gas, or gas is incorporated in the separated liquid. For example, the flow rate of gas-containing crude oil may change by a factor of five after the multiphase flow is produced from an oilfield. Therefore, there are considerable problems associated with the gas-liquid separator disclosed in Non-patent Document 1.

United States Patent No. 4,596,586 (Patent Document 1) discloses a structure that may solve the above problems of the gas-liquid separator disclosed in Non-patent Document 1. In Patent Document 1, an inner pipe is provided in a vertical pipe. The upper end of the inner pipe is connected to a gas outlet pipe and the lower end of the inner pipe is open at a position slightly lower than the entrance of an inlet pipe. The inner pipe serves as a partition wall, and suppresses a phenomenon in which droplets are mixed into the separated gas from the gas-liquid multiphase fluid. A vortex breaker formed by a disc-like baffle plate is also provided horizontally in the lower area. As illustrated in FIG. 17A, a vortex flow that moves downward forms a hollow area therein, and moves the vortex gas to the lower area. The vortex breaks when the vortex flow collides with the vortex breaker, so that a phenomenon in which gas is mixed into liquid is suppressed. The fluid flow rate range applied to the cyclone gas-liquid separator is increased by incorporating the inner pipe and the vortex breaker to the cyclone gas-liquid separator.

The cyclone gas-liquid separator also functions as a mist separator. For example, JP-A-2001-246216 (Patent Document 2) discloses a gas-liquid separator that separates droplets dispersed in gas by utilizing a centrifugal force. The gas-liquid separator disclosed in Patent Document 2 includes an inner pipe and a baffle plate in the same manner as the gas-liquid separator disclosed in Patent Document 1. However, the inner pipe extends downward through the baffle plate, and is open downward. The baffle plate is connected to the lower area of the inner pipe to form a ring, and a circular space is formed between the baffle plate and the outer pipe. A mist-containing gas flows into the outer pipe through the inlet pipe attached to the sidewall of the outer pipe in the tangential direction, and moves downward while forming a vortex flow along the inner wall of the outer pipe. The mist is trapped by the inner wall of the outer pipe, flows downward along the inner wall of the outer pipe, and reaches the liquid outlet pipe. The gas moves downward through the circular space formed by the baffle plate around the inner wall of the outer pipe, then moves upward through the center inner pipe, and reaches the gas outlet pipe. A situation in which the mist-containing gas reaches the gas outlet pipe is prevented by the long inner pipe and the baffle plate that is provided in the lower area of the inner pipe and also extends to an area around the outer pipe. This increases the separation efficiency of the cyclone gas-liquid separator.

According to the above configurations, a vortex flow is produced by attaching the inlet pipe to the side of the outer pipe in the tangential direction. JP-A-2000-317212 (Patent Document 3) discloses a cyclone gas-liquid separator that produces a vortex flow based on a different principle. In the gas-liquid separator disclosed in Patent Document 3, the inlet pipe is connected to the outer pipe so that the inlet pipe extends toward the center axis of the outer pipe and is open toward the circular area formed by the outer pipe and the inner pipe. The circular area is closed by a plate-like guide around the opening, so that bubble-containing liquid is guided to an area opposite to the guide to form a vortex flow.

In the cyclone gas-liquid separator disclosed in United States Patent No. 4,187,088 (Patent Document 4), there is not only the guide around the opening but also a guide that extends to the lower end of the opening of the gas-liquid multiphase fluid inlet pipe. In the gas-liquid separator disclosed in Patent Document 4, the inlet pipe is connected to the outer pipe so that the inlet pipe extends toward the center axis of the outer pipe (i.e., a flow passage is formed). The front side, the upper side, the lower side, and the side opposite to the desired whirl direction are completely enclosed so that a gas-liquid multiphase fluid that enters through the inlet pipe is guided in the whirl direction to form a vortex flow.

The pressure of a gas-liquid multiphase fluid produced from an oilfield is very high, and changes. Therefore, a gas-liquid separator is designed to withstand a high pressure. When using a configuration in which the inlet pipe is connected to the side of the outer pipe in the tangential direction (e.g., the gas-liquid separators disclosed in Non-patent Document 1, Patent Document 1, and Patent Document 2), since the connection section is not symmetrical, an unbalanced load may be repeatedly applied to the weld when the pressure of the fluid changes, so that fatigue failure may occur. On the other hand, a configuration in which the inlet pipe is connected to the outer pipe so that the inlet pipe extends toward the center axis of the outer pipe (e.g., the gas-liquid separators disclosed in Patent Documents 3 and 4) is safe since the connection section is symmetrical.

The gas-liquid separator disclosed in Patent Document 2 is used for gas in which droplets (mist) are dispersed, and the gas-liquid separator disclosed in Patent Document 3 is used for liquid in which bubbles are dispersed. Specifically, Patent Document 3 discloses a gas-liquid separator that separates excess ozone contained in ozone water using a cyclone method. When the cyclone gas-liquid separator is modified in this manner, it can be used for a gas-liquid multiphase fluid that differs in gas-liquid ratio.

In order to efficiently transport crude oil via a tanker or a pipeline, it is indispensable to separate the oilfield produced fluid into gas, water, and crude oil, and determine the flow rate thereof. In some cases the flow rate of a gas-liquid multiphase fluid is directly measured without separating the fluid. However, the flow rate of a gas-liquid multiphase fluid can be more reliably measured by using a gas-liquid separator.

United States Patent No. 5,526,684 (Patent Document 5) discloses a multiphase flow rate measurement device that utilizes a cyclone gas-liquid separator having a simple configuration as disclosed in Non-patent Document 1. In Patent Document 5, a gas flowmeter is provided to the gas outlet pipe to measure the flow rate of gas, and a Coriolis meter is provided to the liquid outlet pipe to measure the flow rates of water and crude oil.

The measurement accuracy of the multiphase flow rate measurement device disclosed in Patent Document 5 depends on the separation performance of the gas-liquid separator. However, since the flow rate range of the gas-liquid separator disclosed in Non-patent Document 1 is limited, sufficient gas-liquid separation may not be implemented when the flow rate of gas-containing crude oil changes by a factor of five. Therefore, the multiphase flow rate measurement device disclosed in Patent Document 5 has a problem because the flow rates of gas, water, and crude oil produced from an oilfield cannot be measured with stable measurement accuracy. In order to deal with this problem, Patent Document 5 also discloses technology of combining two gas-liquid separation pipes on the downstream side of the gas-liquid separator.

The related-art cyclone gas-liquid separators are summarized as follows. Specifically, a cyclone gas-liquid separator having the simplest structure is that the gas-liquid multiphase fluid inlet pipe is connected to the side of the vertical cylinder in the tangential direction, the gas outlet pipe is disposed in the upper area, and the liquid outlet pipe is disposed in the lower area. The gas-liquid separation performance is improved by providing the inner pipe connected to the gas outlet pipe, and providing the baffle plate. A centrifugal force can also be applied to a gas-liquid multiphase fluid by connecting the gas-liquid multiphase fluid inlet pipe to the side of the outer pipe so that the inlet pipe extends toward the center axis of the outer pipe instead of connecting the gas-liquid multiphase fluid inlet pipe to the side of the outer pipe in the tangential direction, and providing the guide around the opening thereof so that the gas-liquid multiphase fluid is guided to a vortex flow. From the viewpoint of safety, it is desirable to connect the gas-liquid multiphase fluid inlet pipe to the side of the outer pipe so that the inlet pipe extends toward the center axis of the outer pipe.

SUMMARY OF INVENTION

TECHNICAL PROBLEM

As described above, the gas-liquid separators and the flow rate measurement device disclosed in Non-patent Document 1 and Patent Documents 1, 2, and 5 are inferior to the gas-liquid separators disclosed in Patent Documents 3 and 4 from the viewpoint of safety at high pressure. The gas-liquid separator disclosed in Patent Document 3 cannot apply a sufficient centrifugal force for separating the oilfield produced gas-liquid multiphase fluid into gas and liquid. The gas-liquid separator disclosed in Patent Document 4 has a complex structure, and the pressure loss by a gas-liquid multiphase flow increases.

The invention was conceived in view of the above situation. Several aspects of the invention may provide a gas-liquid separator that has a simple configuration, and can safely and efficiently separate a gas-liquid multiphase fluid that changes in flow rate and gas-liquid ratio over time into gas and liquid even under high pressure, and a multiphase flow rate measurement device using the same.

SOLUTION TO PROBLEM

(1) According to one aspect of the invention, there is provided a gas-liquid separator that separates a gas-liquid multiphase fluid into gas and liquid, the gas-liquid separator including:

a container that includes a top section, a bottom section, and a hollow body section that connects the top section and the bottom section;
an inlet pipe that supplies the gas-liquid multiphase fluid to the container via an inlet opening formed in a side surface of the body section;
a gas outlet pipe that discharges gas via the top section;
a liquid outlet pipe that discharges liquid via the bottom section;
an inner pipe that is hollow, an upper end of the inner pipe being connected to the top section, and a lower end of the inner pipe being open at a position lower than a lower end of the inlet pipe; and
a guide plate that is provided on at least one of an outer side surface of the inner pipe and an inner side surface of the body section,
the inner side surface of the body section and the outer side surface of the inner pipe being concentric when viewed from above;
the inlet pipe extending toward a center axis of the body section when viewed from above;
the guide plate including a guide plate side section that extends in a non-horizontal direction, and a guide plate lower section that extends in a non-vertical direction and is continuous with the guide plate side section;
the guide plate side section being at least disposed on the inner side surface of the body section at a position on one side of the inlet opening, or on the outer side surface of the inner pipe at a position on one side of an area opposite to the inlet opening;
the guide plate lower section being at least disposed on the outer side surface of the inner pipe at a position directly under an area opposite to the inlet opening and along the outer side surface of the inner pipe when viewed from above; and
a space being at least partially formed between the guide plate lower section and the body section.

Specifically, since the inlet pipe extends toward the center axis of the body section when viewed from above, the mechanical strength of the joint between the inlet pipe and the body section increases. This makes it possible to implement a gas-liquid separator that can safely separate a gas-liquid multiphase fluid into gas and liquid even under high pressure.

Moreover, since a space is at least partially formed between the guide plate lower section and the body section, it is possible to implement a gas-liquid separator that can separate a gas-liquid multiphase fluid that changes in flow rate and gas-liquid ratio to a large extent over time into gas and liquid with a high separation efficiency using a simple configuration.

(2) In the above gas-liquid separator,
the guide plate may include:

a first guide plate that is provided on the outer side surface of the inner pipe or the inner side surface of the body section, and forms the guide plate side section; and
a second guide plate that is provided on the outer side surface of the inner pipe, and forms the guide plate lower section.

(3) In the above gas-liquid separator,
the guide plate lower section may be formed so that a space is not continuously formed between the guide plate lower section and the inner side surface of the body section at least in an area from a position directly under the guide plate side section to an area directly under the inlet opening when viewed in an extension direction of the inlet pipe.

According to this configuration, a centrifugal force can be applied to a fluid around the inlet pipe, and liquid that has moved to the inner side surface of the container due to a centrifugal force can efficiently flow through the space at a position away from the inlet pipe.

(4) The above gas-liquid separator may further include:

a lower-area leakage prevention plate that comes in contact with the guide plate lower section on a side opposite to the inlet pipe, and
a space formed between the body section and the guide plate lower section at least from a position directly under the guide plate side section to an area directly under the inlet pipe may be closed by the lower-area leakage prevention plate when viewed in the extension direction of the inlet pipe.

Leakage of fluid through the space formed between the body section of the container and the guide plate lower section can be prevented by providing the lower-area leakage prevention plate. Therefore, a centrifugal force can be applied to a fluid around the inlet pipe, and liquid that has moved to the inner side surface of the container due to a centrifugal force can efficiently flow through the space at a position away from the inlet pipe.

(5) In the above gas-liquid separator, a width of the space may increase as a distance from an end of the guide plate lower section decreases.

Therefore, liquid that has moved to the inner side surface of the container due to a centrifugal force can efficiently flow through the space.

(6) The above gas-liquid separator may further include a side-area leakage prevention plate that closes a space formed between the guide plate side section and the body section or the inner pipe.

Leakage of fluid through the space formed between the guide plate side section and the body section of the container or the inner pipe can be prevented by providing the side-area leakage prevention plate. This makes it possible to effectively apply a centrifugal force to the fluid.

(7) The above gas-liquid separator may further include:

a baffle plate that includes a plate-like section and a tubular section, the plate-like section being formed in the shape of a plate having a center opening at a position lower than the lower end of the inner pipe inside the container, and being held so that a periphery thereof adheres to the inner side surface of the body section, and the tubular section being formed above the plate-like section in the shape of a tube that communicates with the opening formed in the plate-like section.

This makes it possible to efficiently discharge bubbles that are incorporated in the downward-flowing liquid when the liquid collides with the liquid surface.

(8) The above gas-liquid separator may further include:

a vortex breaker that is formed in the shape of a plate, a cone, or a pyramid, and covers an area directly over a connection section between the liquid outlet pipe and the bottom section.

According to this configuration, a vortex of fluid that consists of a center gas vortex and a peripheral liquid vortex breaks, so that a situation in which the gas vortex is incorporated in the liquid flows into the liquid outlet pipe can be prevented.

(9) The above gas-liquid separator may further include:

a droplet separator that separates droplets from gas;
a bubble separator that separates bubbles from liquid; and
a pipe that connects the droplet separator and the bubble separator,
the droplet separator may be connected to the gas outlet pipe; and
the bubble separator may be connected to the liquid outlet pipe.

This makes it possible to discharge liquid separated by the droplet separator to the liquid outlet pipe, and discharge gas separated by the bubble separator to the gas outlet pipe.

(10) According to another aspect of the invention, there is provided a multiphase flow rate measurement device including:

the above gas-liquid separator;
a liquid-level gauge that measures a height of a liquid surface inside the container;
liquid level control means that adjusts the height of the liquid surface inside the container based on the measurement result of the liquid-level gauge;
a gas flowmeter that measures a flow rate of gas discharged via the gas outlet pipe; and
a liquid flowmeter that measures a flow rate of liquid discharged via the liquid outlet pipe.

This makes it possible to implement a multiphase flow rate measurement device that can accurately measure the flow rates of gas and liquid contained in a gas-liquid multiphase fluid.

BRIEF DESCRIPTION OF DRAWINGS

FIG. 1 is an exemplary schematic view illustrating the meridian cross section of a gas-liquid separator 1 according to a first embodiment.
FIG. 2 is an exemplary schematic cross-sectional view illustrating the gas-liquid separator 1 according to the first embodiment taken along the line A-A in FIG. 1.
FIG. 3 is a partial enlarged view illustrating an example of an inner pipe 50 and a guide plate 60 viewed in the extension direction of an inlet pipe 20.
FIG. 4 is a perspective view illustrating an example of the inner pipe 50 and the guide plate 60 provided on the inner pipe 50 in FIG. 3.
FIG. 5 is a partial enlarged view illustrating another example of the inner pipe 50 and the guide plate 60 viewed in the extension direction of the inlet pipe 20.
FIG. 6 is an exemplary schematic view illustrating the meridian cross section of a gas-liquid separator 1a according to a modification of the first embodiment.
FIG. 7 is an exemplary schematic cross-sectional view illustrating the gas-liquid separator 1a taken along the line A-A in FIG. 6.
FIG. 8 is an exemplary schematic view illustrating the meridian cross section of a gas-liquid separator 1b according to a modification of the first embodiment.
FIG. 9 is an exemplary schematic cross-sectional view illustrating the gas-liquid separator 1b taken along the line A-A in FIG. 8
FIG. 10 is an exemplary schematic cross-sectional view illustrating a gas-liquid separator 1c according to a modification of the gas-liquid separator 1b taken along the line A-A in FIG. 8.
FIG. 11 is a perspective view illustrating an example of a baffle plate 80.
FIG. 12 is a perspective view illustrating an example of a vortex breaker 90.
FIG. 13 is an exemplary schematic view illustrating the meridian cross section of a gas-liquid separator 1d according to a further modification of the first embodiment.

FIG. 14 is an exemplary schematic view illustrating the meridian cross section of a gas-liquid separator 2 according to a second embodiment.

FIG. 15 is a graph illustrating the liquid in gas per total liquid measurement results obtained by using the gas-liquid separator 1 according to the first embodiment.

FIG. 16 is an exemplary schematic view illustrating the meridian cross section of a multiphase flow rate measurement device 5 according to one embodiment of the invention.

FIG. 17A is a meridian cross-sectional view illustrating a gas-liquid separator according to the related art disclosed in Non-patent Document 1.

FIG. 17B is a horizontal cross-sectional view illustrating a gas-liquid separator according to the related art disclosed in Non-patent Document 1.

DESCRIPTION OF EMBODIMENTS

Exemplary embodiments of the invention are described in detail below with reference to the drawings. Note that the following embodiments do not unduly limit the scope of the invention as stated in the claims. Note also that all of the elements described below should not necessarily be taken as essential elements of the invention.

1. Gas-liquid separator

1-1. Gas-liquid separator according to first embodiment

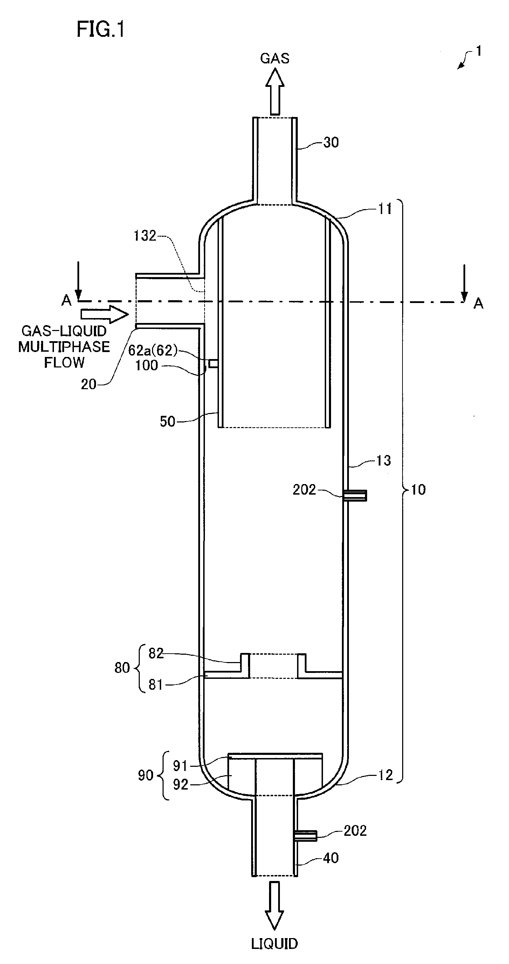

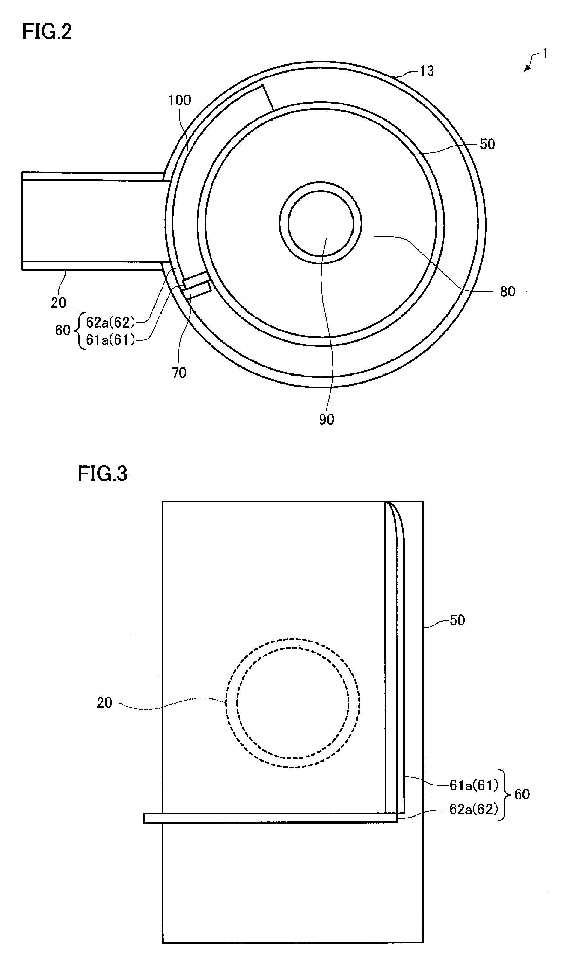

FIG. 1 is an exemplary schematic view illustrating the meridian cross section of a gas-liquid separator 1 according to a first embodiment. FIG. 2 is an exemplary schematic cross-sectional view illustrating the gas-liquid separator 1 according to the first embodiment taken along the line A-A in FIG. 1.

The gas-liquid separator 1 according to the first embodiment separates a gas-liquid multiphase fluid into gas and liquid, and includes a container 10 that includes a top section 11, a bottom section 12, and a hollow body section 13 that connects the top section 11 and the bottom section 12, an inlet pipe 20 that supplies a gas-liquid multiphase fluid to the container 10 via an inlet opening 132 formed in the side surface of the body section 13, a gas outlet pipe 30 that discharges gas via the top section 11, a liquid outlet pipe 40 that discharges liquid via the bottom section 12, a hollow inner pipe 50, the upper end of the inner pipe 50 being connected to the top section 11, and the lower end of the inner pipe 50 being open at a position lower than the lower end of the inlet pipe 20, and a guide plate 60 that is provided on at least one of the outer side surface of the inner pipe 50 and the inner side surface of the body section 13. The inner side surface of the body section 13 and the outer side surface of the inner pipe 50 are concentric when viewed from above. The inlet pipe 20 extends toward the center axis of the body section 13 when viewed from above. The guide plate 60 includes a guide plate side section 61 that extends in a non-horizontal direction, and a guide plate lower section 62 that extends in a non-vertical direction and is continuous with the guide plate side section 61. The guide plate side section 61 is at least disposed on the inner side surface of the body section 13 at a position on one side of the inlet opening 132, or on the outer side surface of the inner pipe 50 at a position on one side of an area opposite to the inlet opening 132. The guide plate lower section 62 is at least disposed on the outer side surface of the inner pipe 50 at a position directly under an area opposite to the inlet opening 132 along the outer side surface of the inner pipe 50 when viewed from above. A space 100 is at least partially formed between the guide plate lower section 62 and the body section 13.

The container 10 includes the top section 11, the bottom section 12, and the hollow body section 13 that connects the top section 11 and the bottom section 12. In the example illustrated in FIG. 1, the container 10 is a hollow container that extends in the vertical direction. The horizontal cross-sectional shape of the inner side surface of the body section 13 is circular. In the example illustrated in FIG. 1, the body section 13 has an identical diameter from the top section 11 to the bottom section 12. The center axis of the body section 13 is parallel to the vertical direction. Note that the invention is not limited to the above configuration. For example, part of the body section 13 may have a different inner diameter.

The inlet pipe 20 communicates with the inner space of the container 10 via the inlet opening 132 formed in the side surface of the body section 13 of the container 10. The inlet pipe 20 functions as a flow passage for supplying a gas-liquid multiphase fluid to the container 10. As illustrated in FIG. 1, the inlet pipe 20 extends in the horizontal direction when viewed from the side. As illustrated in FIG. 2, the inlet pipe 20 extends toward the center axis of the body section 13 when viewed from above. In the example illustrated in FIGS. 1 and 2, the inlet pipe 20 is provided so that the extension of a horizontal cross section along the centerline of the inlet pipe 20 in the supply direction of the gas-liquid multiphase fluid intersects the center axis of the body section 13. It is preferable that the inlet pipe 20 be provided so that the centerline of the inlet pipe 20 intersects the center axis of the body section 13 when viewed from above taking account of the symmetry of the connection area between the body section 13 of the container 10 and the inlet pipe 20 in order to improve safety. In the example illustrated in FIGS. 1 and 2, the vertical cross-sectional shape of the inner side surface of the inlet pipe 20 is circular.

According to the gas-liquid separator 1 according to the first embodiment, since the inlet pipe 20 extends toward the center axis of the body section 13 when viewed from above, it is possible to implement a gas-liquid separator that can safely separate a gas-liquid multiphase fluid into gas and liquid even under high pressure.

Note that the inlet pipe 20 may be inclined downward. This makes it possible to effectively separate a gas-liquid multiphase fluid into gas and liquid.

The gas outlet pipe 30 communicates with the inner space of the container 10 via the top section 11 of the container 10. The gas outlet pipe 30 functions as a flow passage for discharging gas separated by the gas-liquid separator 1 from the container 10. In the example illustrated in FIG. 1, the gas outlet pipe 30 extends from the center of the top section 11 in the vertical direction. Note that the invention is not limited to the above configuration. For example, the gas outlet pipe 30 may be provided at a position that deviates from the center of the top section 11, or may be inclined with respect to the vertical direction. In the example illustrated in FIGS. 1 and 2, the horizontal cross-sectional shape of the inner side surface of the gas outlet pipe 30 is circular.

The liquid outlet pipe 40 communicates with the inner space of the container 10 via the bottom section 12 of the container 10. The liquid outlet pipe 40 functions as a flow passage for discharging liquid separated by the gas-liquid separator 1 from the container 10. In the example illustrated in FIG. 1, the liquid outlet pipe 40 extends from the center of the bottom section 12 in the vertical direction. Note that the invention is not limited to the above configuration. For example, the liquid outlet pipe 40 may be provided at a position that deviates from the center of the bottom section 12, or may be inclined with respect to the vertical direction. In the example illustrated in FIGS. 1 and 2, the horizontal cross-sectional shape of the inner side surface of the liquid outlet pipe 30 is circular.

The inner pipe 50 has a hollow tubular shape. The upper end of the inner pipe 50 is connected to the top section 11 of the container 10. In the example illustrated in FIG. 1, the upper end of the inner pipe 50 is seal-tightly connected to the top section 11 of the container 10. The lower end of the inner pipe 50 is open at a position lower than the lower end of the inlet pipe 20. The inner pipe 50 communicates with the gas outlet pipe 30.

The cross-sectional shape of the outer side surface of the inner pipe 50 is circular. As illustrated in FIG. 2, the inner side surface of the body section 13 of the container 10 and the outer side surface of the inner pipe 50 are concentric when viewed from above. In the example illustrated in FIGS. 1 and 2, the horizontal cross-sectional shape of the inner side surface of the inner pipe 50 is circular, and the inner side surface of the inner pipe 50 has an identical diameter. Note that the invention is not limited to the above configuration. For example, part of the inner pipe 50 may have a different inner diameter and/or a different outer diameter.

In the example illustrated in FIGS. 1 and 2, the guide plate 60 is provided on the outer side surface of the inner pipe 50. As illustrated in FIG. 2, the guide plate 60 is provided along part of the outer side surface of the inner pipe 50 when viewed from above. It is preferable the guide plate 60 and the outer side surface of the inner pipe 50 be closely joined by welding or the like in order to ensure sufficient mounting strength and seal-tightness.

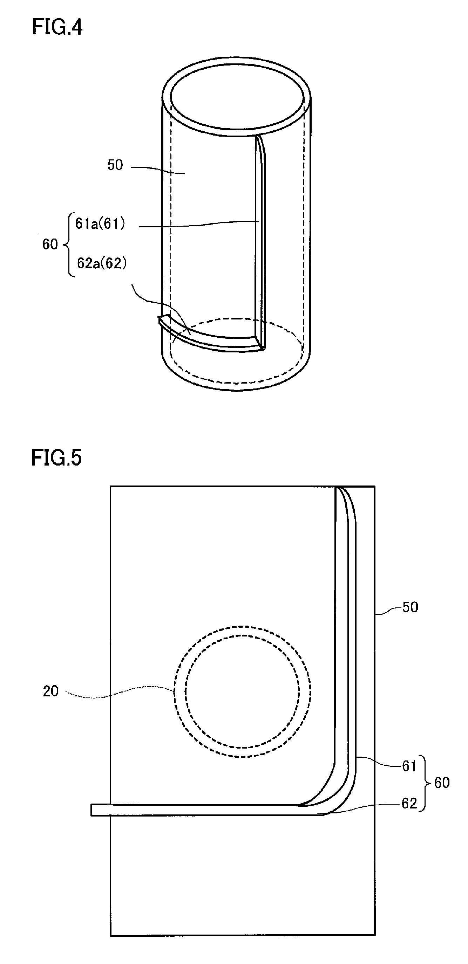

FIG. 3 is a partial enlarged view illustrating an example of the inner pipe 50 and the guide plate 60 viewed in the extension direction of the inlet pipe 20. FIG. 4 is a perspective view illustrating an example of the inner pipe 50 and the guide plate 60 provided on the inner pipe 50 in FIG. 3.

As illustrated in FIG. 3, the guide plate 60 includes the guide plate side section 61 that extends in a non-horizontal direction, and the guide plate lower section 62 that extends in a non-vertical direction and is continuous with the guide plate side section 61. The guide plate side section 61 is at least disposed on the outer side surface of the inner pipe 50 at a position on one side of an area opposite to the inlet opening 132. The guide plate lower section 62 is at least disposed on the outer side surface of the inner pipe 50 at a position directly under an area opposite to the inlet opening 132 along the outer side surface of the inner pipe 50 when viewed from above.

The guide plate 60 allows a gas-liquid multiphase fluid supplied via the inlet pipe 20 to flow through the space between the inner side surface of the body section 13 of the container 10 and the outer side surface of the inner pipe 50 while whirling from one side to the other side of the inlet pipe 20 when viewed in the extension direction of the inlet pipe 20. This makes it possible to separate the gas-liquid multiphase fluid into gas and liquid by utilizing the centrifugal force.

It is preferable that the guide plate lower section 62 be provided on the outer side surface of the inner pipe 50 at least within a range from the position directly under the guide plate side section 61 to the position directly under an area of outer side surface of the inner pipe 50 opposite to the inlet opening 132 when observing the center axis of the body section 13 in the horizontal direction from the inlet opening 132 of the body section 13, and provided within an angular range of 40 to 180° around the center axis of the body section 13 when viewed from above. In the example illustrated in FIG. 2, the guide plate lower section 62 is provided to have a partial arc shape within an angular range of 90° from the position directly under the guide plate side section 61 when viewed from above. If the guide plate lower section 62 is provided within an angular range of 40° or more, a gas-liquid multiphase fluid supplied via the inlet pipe 20 can be easily guided to the desired whirl direction. If the guide plate lower section 62 is provided within an angular range of 180° or less, a situation in which a gas-liquid multiphase fluid supplied via the inlet pipe 20 unnecessarily whirls can be prevented, so that a pressure loss can be suppressed.

It is preferable that the guide plate lower section 62 be positioned so that the distance between the guide plate lower section 62 and the lower end of the inlet pipe 20 is equal to or less than twice the vertical dimension of the opening where the inlet pipe 20 communicates with the container 10. It is more preferable that the guide plate lower section 62 be positioned so that the distance between the guide plate lower section 62 and the lower end of the inlet pipe 20 is equal to or less than the vertical dimension of the opening where the inlet pipe 20 communicates with the container 10. This prevents a situation in which a gas-liquid multiphase fluid supplied via the inlet pipe 20 unnecessarily flows downward, so that a sufficient centrifugal force can be applied to the gas-liquid multiphase fluid.

As illustrated in FIGS. 3 and 4, the guide plate 60 may include a first guide plate 61a that is provided on the outer side surface of the inner pipe 50, and forms the guide plate side section 61, and a second guide plate 62a that is provided on the outer side surface of the inner pipe 50, and forms the guide plate lower section 62. In the example illustrated in FIGS. 3 and 4, the first guide plate 61a and the second guide plate 62a adhere to the outer side surface of the inner pipe 50.

In the example illustrated in FIGS. 3 and 4, the first guide plate 61a is formed in the shape of a plate that extends in the vertical direction. The second guide plate 62a is formed in the shape of a plate that extends in the horizontal direction. The first guide plate 61a and the second guide plate 62a are in contact with each other. It is preferable that the first guide plate 61a and the second guide plate 62a be joined by welding or the like so that leakage of a gas-liquid multiphase fluid supplied via the inlet pipe 20 does not occur. Note that the invention is not limited to the above configuration. For example, the first guide plate 61a (guide plate side section 61) may be inclined with respect to the vertical direction, and the second guide plate 62a (guide plate lower section 62) may be inclined with respect to the horizontal direction. At least one of the first guide plate 61a (guide plate side section 61) and the second guide plate 62a (guide plate lower section 62) may be curved.

In the example illustrated in FIGS. 3 and 4, the upper side of the second guide plate 62a is horizontal (i.e., extends in the horizontal direction). Note that the invention is not limited to the above configuration. For example, the upper side of the second guide plate 62a (guide plate lower section 62) may be inclined downward to the inner side surface of the container 10, or may be inclined downward to the outer side surface of the inner pipe 50.

FIG. 5 is a partial enlarged view illustrating another example of the inner pipe 50 and the guide plate 60 viewed in the extension direction of the inlet pipe 20. As illustrated in FIG. 5, the guide plate side section 61 and the guide plate lower section 62 of the guide plate 60 may be integrated when viewed in the extension direction of the inlet pipe 20. In the example illustrated in FIG. 5, the guide plate 60 is formed by a single plate, and adheres to the outer side surface of the inner pipe 50.

As illustrated in FIG. 3 or 5 and FIG. 2, the space 100 is at least partially formed between the guide plate lower section 62 and the body section 13 of the container 10. In the example illustrated in FIGS. 2 and 3, the space 100 is formed between the guide plate lower section 62 (second guide plate 62a) and the body section 13 of the container 10.

The space 100 allows a high-density liquid to be separated from a gas-liquid multiphase fluid supplied via the inlet pipe 20, and flow downward along the inner side surface of the container 10 before the gas-liquid multiphase fluid reaches the lower end of the guide plate lower section 62. Specifically, the space 100 functions as a flow passage that allows liquid separated from a gas-liquid multiphase fluid to quickly flow downward inside the container 10. This makes it possible to enlarge the flow passage for gas separated from a gas-liquid multiphase fluid, so that the gas-liquid multiphase fluid can be separated into gas and liquid with a high separation efficiency even if there is an increase in the flow rate and the ratio of liquid. Moreover, a pressure loss can be suppressed by providing the space 100. Note that the space 100 may be provided at a plurality of positions.

A gas-liquid multiphase fluid that changes in flow rate and gas-liquid ratio to a large extent over time can thus be separated into gas and liquid with a high separation efficiency using a simple configuration by utilizing the gas-liquid separator 1 according to the first embodiment.

1-2. Modification of gas-liquid separator 1 according to first embodiment

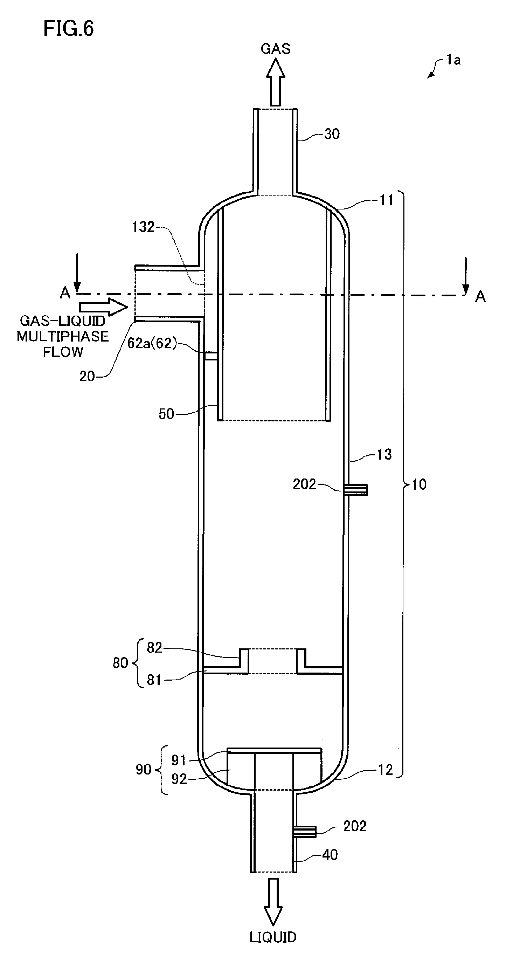

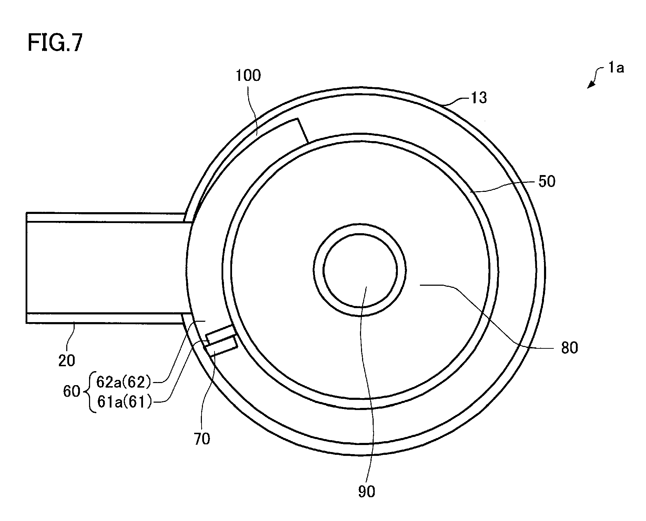

FIG. 6 is an exemplary schematic view illustrating the meridian cross section of a gas-liquid separator 1a according to a modification of the first embodiment, and FIG. 7 is an exemplary schematic cross-sectional view illustrating the gas-liquid separator 1a taken along the line A-A in FIG. 6.

The guide plate lower section 62 may be formed so that a space is not continuously formed between the guide plate lower section 62 and the inner side surface of the body section 13 at least in an area from a position directly under the guide plate side section 61 to a position directly under an area of the outer side surface of the inner pipe 50 opposite to the inlet opening 132 when observing the center axis of the body section 13 in the horizontal direction from the inlet opening 132 of the body section 13. Specifically, the guide plate 60 may continuously come in contact with the inner side surface of the body section 13 of the container 10 at least in an area directly under an area of the outer side surface of the inner pipe 50 opposite to the inlet opening 132 when observing the center axis of the body section 13 in the horizontal direction from the inlet opening 132 of the body section 13. In the example illustrated in FIGS. 6 and 7, a space is not continuously formed between the second guide plate 62a (guide plate lower section 62) and the inner side surface of the body section 13 in an area from a position directly under the guide plate side section 61 to a position directly under an area of the outer side surface of the inner pipe 50 opposite to the inlet opening 132.

According to this configuration, a centrifugal force can be applied to fluid at a position around the inlet pipe 20, and liquid that has moved to the inner side surface of the container 10 due to a centrifugal force can efficiently flow through the space 100 at a position away from the inlet pipe 20.

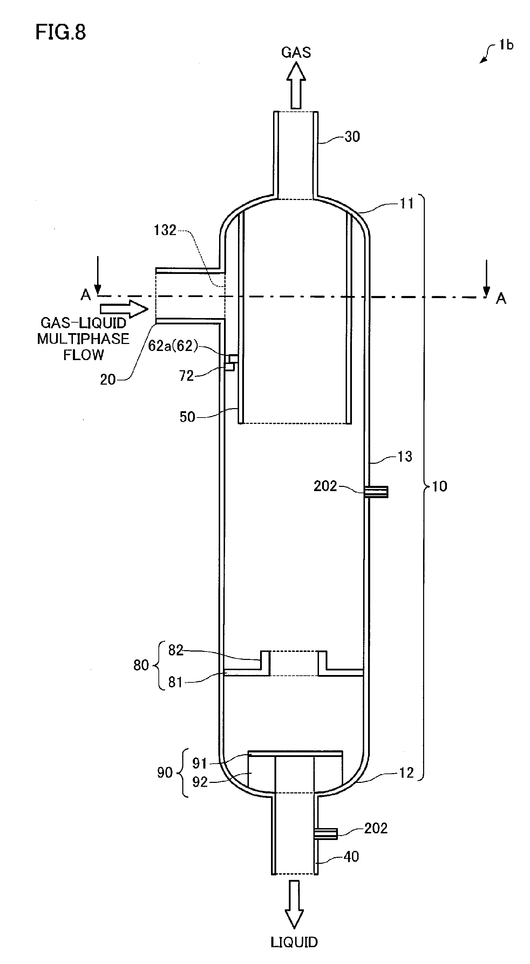

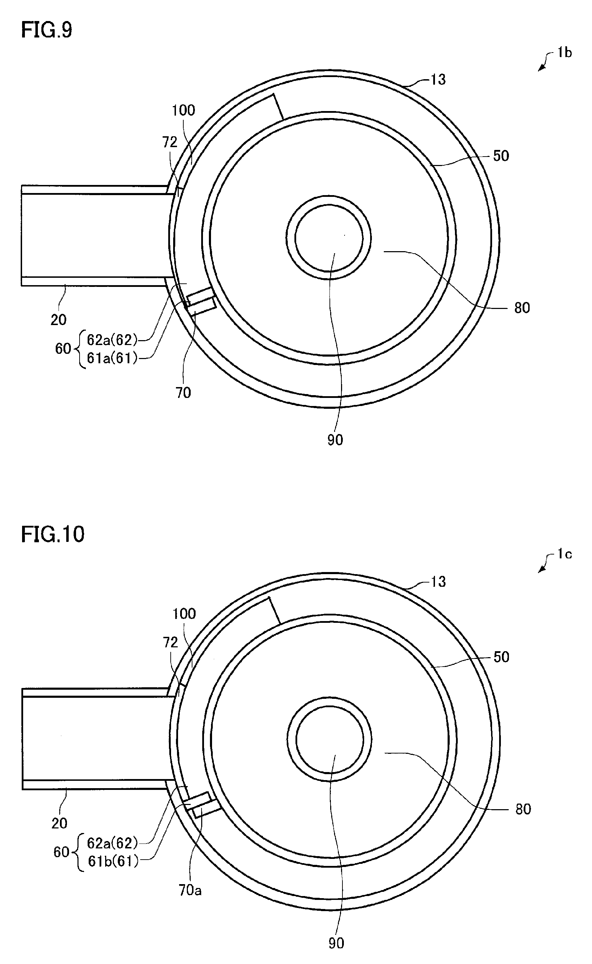

FIG. 8 is an exemplary schematic view illustrating the meridian cross section of a gas-liquid separator 1b according to another modification of the first embodiment, and FIG. 9 is an exemplary schematic cross-sectional view illustrating the gas-liquid separator 1b taken along the line A-A in FIG. 8.

As illustrated in FIGS. 8 and 9, the gas-liquid separator 1b may include a lower-area leakage prevention plate 72 that comes in contact with the guide plate lower section 62 on the side opposite to the inlet pipe 20. The space formed between the body section 13 and the guide plate lower section 62 at least from the position directly under the guide plate side section 61 to the area directly under the inlet pipe 20 may be closed by the lower-area leakage prevention plate 72 when viewed in the extension direction of the inlet pipe 20. In the example illustrated in FIGS. 8 and 9, the lower-area leakage prevention plate 72 adheres to the inner side surface of the body section 13. The lower-area leakage prevention plate 72 may adhere to the guide plate lower section 62 (second guide plate 62a) in the area from the position directly under the guide plate side section 61 (first guide plate 61a) to the area directly under the inlet pipe 20.

Since the second guide plate 62a is provided on the outer side surface of the inner pipe 50, a space is formed between the second guide plate 62a and the inner side surface of the body section 13 of the container 10 during production. Leakage of a gas-liquid multiphase fluid through the space formed between the second guide plate 62a and the inner side surface of the body section 13 of the container 10 can be prevented by providing the lower-area leakage prevention plate 72 on the inner side surface of the body section 13. This makes it possible to effectively apply a centrifugal force to the gas-liquid multiphase fluid.

As illustrated in FIGS. 7 and 9, the gas-liquid separator 1a and the gas-liquid separator 1b may be configured so that the width (dimension) of the space 100 increases as the distance from the end of the guide plate lower section 62 decreases.

According to this configuration, liquid that has moved to the inner side surface of the container 10 due to a centrifugal force can be efficiently discharged through the space 100.

As illustrated in FIG. 2 and FIG. 7 or 9, the gas-liquid separator 1, the gas-liquid separator 1a, and the gas-liquid separator 1b according to the first embodiment may include a side-area leakage prevention plate 70 that comes in contact with the guide plate side section 61 on the opposite side of the inlet pipe 20 and closes a space formed between the guide plate side section 61 and the body section 13. In the example illustrated in FIGS. 2, 7, and 9, the side-area leakage prevention plate 70 adheres to the inner side surface of the body section 13. The side-area leakage prevention plate 70 may adhere to the guide plate side section 61.

In the example illustrated in FIGS. 2, 7, and 9, since the guide plate side section 61 (first guide plate 61a) is provided on the outer side surface of the inner pipe 50, a space is formed between the guide plate side section 61 (first guide plate 61a) and the inner side surface of the body section 13 of the container 10 during production. Leakage of a gas-liquid multiphase fluid through the space formed between the guide plate side section 61 (first guide plate 61a) and the inner side surface of the body section 13 of the container 10 can be prevented by providing the side-area leakage prevention plate 70 on the inner side surface of the body section 13. This makes it possible to effectively apply a centrifugal force to the gas-liquid multiphase fluid.

Note that the side-area leakage prevention plate 70 and the lower-area leakage prevention plate 72 may be integrally formed (i.e., may be formed by a single member). For example, the side-area leakage prevention plate 70 and the lower-area leakage prevention plate 72 may be formed by a single plate.

FIG. 10 is an exemplary schematic cross-sectional view illustrating a gas-liquid separator 1c according to a modification of the gas-liquid separator 1b taken along the line A-A in FIG. 8. The meridian cross section of the gas-liquid separator 1c is the same as that in example illustrated in FIG. 8.

As illustrated in FIGS. 8 and 10, the guide plate 60 may include a first guide plate 61b that is provided on the inner side surface of the body section 13, and forms the guide plate side section 61, and the second guide plate 62a that is provided on the outer side surface of the inner pipe 50, and forms the guide plate lower section 62. Specifically, the first guide plate 61b (guide plate side section 61) is at least disposed on the inner side surface of the body section 13 at a position on one side of the inlet opening 132, and the second guide plate 62a (guide plate lower section 62) is at least disposed on the outer side surface of the inner pipe 50 at a position directly under an area opposite to the inlet opening 132 along the outer side surface of the inner pipe 50 when viewed from above. In the example illustrated in FIGS. 8 and 10, the first guide plate 61b adheres to the inner side surface of the body section 13. The second guide plate 62a adheres to the outer side surface of the inner pipe 50.

In the example illustrated in FIGS. 8 and 10, the first guide plate 61b is formed in the shape of a plate that extends in the vertical direction. The second guide plate 62a is formed in the shape of a plate that extends in the horizontal direction. The first guide plate 61b and the second guide plate 62a are in contact with each other. Note that the invention is not limited to the above configuration. For example, the first guide plate 61b (guide plate side section 61) may be inclined with respect to the vertical direction, and the second guide plate 62a (guide plate lower section 62) may be inclined with respect to the horizontal direction. At least one of the first guide plate 61b (guide plate side section 61) and the second guide plate 62a (guide plate lower section 62) may be curved.

In the example illustrated in FIGS. 8 and 10, the upper side of the second guide plate 62a is horizontal (i.e., extends in the horizontal direction). Note that the invention is not limited to the above configuration. For example, the upper side of the second guide plate 62a (guide plate lower section 62) may be inclined downward to the inner side surface of the container 10, or may be inclined downward to the outer side surface of the inner pipe 50.

As illustrated in FIG. 10, the gas-liquid separator 1c may include the side-area leakage prevention plate 70 that comes in contact with the guide plate side section 61 on the opposite side of the inlet pipe 20 and closes the space formed between the guide plate side section 61 (first guide plate 61b) and the inner pipe 50. In the example illustrated in FIG. 10, the side-area leakage prevention plate 70 adheres to the outer side surface of the inner pipe 50. The side-area leakage prevention plate 70 may adhere to the guide plate side section 61 (first guide plate 61b).

In the example illustrated in FIG. 10, since the guide plate side section 61 (first guide plate 61b) is provided on the inner side surface of the body section 13, a space is formed between the guide plate side section 61 (first guide plate 61b) and the outer side surface of the inner pipe 50 during production. Leakage of a gas-liquid multiphase fluid through the space formed between the guide plate side section 61 (first guide plate 61b) and the outer side surface of the inner pipe 50 can be prevented by providing the side-area leakage prevention plate 70 on the outer side surface of the inner pipe 50. This makes it possible to effectively apply a centrifugal force to the gas-liquid multiphase fluid.

As illustrated in FIGS. 8 and 10, the gas-liquid separator 1c may include the lower-area leakage prevention plate 72 that comes in contact with the guide plate lower section 62 on the opposite side of the inlet pipe 20 and closes the space formed between the guide plate lower section 62 and the body section 13. The space formed between the body section 13 and the guide plate lower section 62 at least from the position directly under the guide plate side section 61 to an area directly under an area of the outer side surface of the inner pipe 50 opposite to the inlet opening 132 may be closed by the lower-area leakage prevention plate 72 when observing the center axis of the body section 13 in the horizontal direction from the inlet opening 132 of the body section 13. In the example illustrated in FIGS. 8 and 10, the lower-area leakage prevention plate 72 adheres to the inner side surface of the body section 13. The lower-area leakage prevention plate 72 may adhere to the guide plate lower section 42 (second guide plate 42a) in the area from the position directly under the guide plate side section 61 (first guide plate 61b) to an area directly under an area of the outer side surface of the inner pipe 50 opposite to the inlet opening 132.

Since the second guide plate 62a is provided on the outer side surface of the inner pipe 50, a space is formed between the second guide plate 62a and the inner side surface of the body section 13 of the container 10 during production. Leakage of a gas-liquid multiphase fluid through the space formed between the second guide plate 62a and the inner side surface of the body section 13 of the container 10 can be prevented by providing the lower-area leakage prevention plate 72 on the inner side surface of the body section 13. This makes it possible to effectively apply a centrifugal force to the gas-liquid multiphase fluid.

As illustrated in FIGS. 1, 6, and 8, the gas-liquid separator 1, the gas-liquid separator 1a, the gas-liquid separator 1b, and the gas-liquid separators 1c may include a baffle plate 80 that includes a plate-like section 81 and a tubular section 82, the plate-like section 81 being formed in the shape of a plate having a center opening at a position lower than the lower end of the inner pipe 50 inside the container 10, and being held so that the periphery thereof adheres to the inner side surface of the body section 13, and the tubular section 82 being formed on the plate-like section 81 in the shape of a tube that communicates with the opening formed in the plate-like section 81.

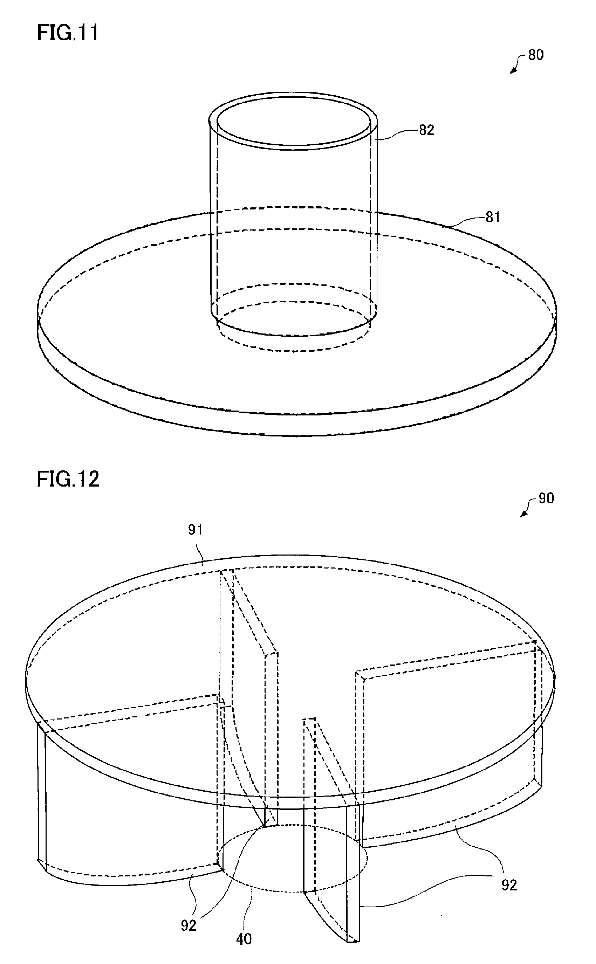

FIG. 11 is a perspective view illustrating an example of the baffle plate 80. In the example illustrated in FIG. 11, the plate-like section 81 is formed in the shape of a circular plate having a center opening. The tubular section 82 is formed in the shape of a cylinder that extends from the plate-like section 81 in the vertical direction, and adheres to the plate-like section 81 so that the tubular section 82 communicates with the opening formed in the plate-like section 81. In the example illustrated in FIGS. 1, 6, and 8, the plate-like section 81 of the baffle plate 80 is horizontally held so that the periphery thereof adheres to the inner side surface of the body section 13. Note that the invention is not limited to the above configuration. For example, the shape of the opening may be polygonal, or the horizontal cross-sectional shape of the inner side surface of the tubular section 82 may be polygonal. The plate-like section 81 may be inclined from the center opening toward the body section 13.

When liquid that flows downward inside the container 10 has collided with the liquid surface inside the container 10, bubbles may be incorporated in the liquid at the liquid surface upon collision, and may remain in the liquid discharged from the container 10. The baffle plate 80 reverses the flow of the liquid that contains a large amount of bubbles so that the bubbles are discharged to the gas phase. Since most of the liquid flows downward along in the inner side surface of the container 10, the baffle plate 80 is configured so that a space is not formed between the baffle plate 80 and the body section 13 of the container 10. It is preferable that the liquid surface inside the container 10 be positioned to be higher than the baffle plate 80, and the lower end of the inner pipe 50 be positioned away from the liquid surface so that liquid is not discharged to the gas outlet pipe 30 with gas via the inner pipe 50, for example.

The gas-liquid separator 1 according to the first embodiment that includes the baffle plate 80 can efficiently discharge bubbles that are incorporated in the downward-flowing liquid when the liquid collides with the liquid surface. This makes it possible to increase the gas-liquid separation efficiency.

As illustrated in FIGS. 1, 6, and 8, the gas-liquid separator 1, the gas-liquid separator 1a, the gas-liquid separator 1b, and the gas-liquid separators 1c may include a vortex breaker 90 at a position directly over the connection (communication) section between the liquid outlet pipe 40 and the bottom section 12.

FIG. 12 is a perspective view illustrating an example of the vortex breaker 90. In the example illustrated in FIG. 12, the vortex breaker 90 includes a vortex breaker main body 91 that is formed in the shape of a disc, and a plurality of leg sections 92 that horizontally support the vortex breaker main body 91. The vortex breaker main body 91 covers an area directly over the connection (communication) section between the liquid outlet pipe 40 and the bottom section 12. The vortex breaker main body 91 is formed so that a space is formed between the vortex breaker main body 91 and the body section 13 of the container 10 and between the vortex breaker main body 91 and the bottom section 12 of the container 10. Note that the invention is not limited to the above configuration. For example, the vortex breaker main body 91 may be formed in the shape of a polygon, or may be formed in the shape of a cone or a pyramid that has a top vertex and a bottom surface.

When the gas-liquid separator 1 according to the first embodiment includes the vortex breaker 90, a vortex of fluid that consists of a center gas vortex and a peripheral liquid vortex breaks, so that a situation in which the gas vortex is incorporated in the liquid flows into the liquid outlet pipe 40 can be prevented. This makes it possible to increase the gas-liquid separation efficiency.

When using the baffle plate 80 and the vortex breaker 90 in combination, it is preferable that the gas-liquid separator 1 include the baffle plate 80 at a position higher than the vortex breaker 90. Since a vortex can be formed at a high position using the tubular section 82 of the baffle plate 80, bubbles contained in liquid can be effectively separated. This makes it possible to further increase the gas-liquid separation efficiency.

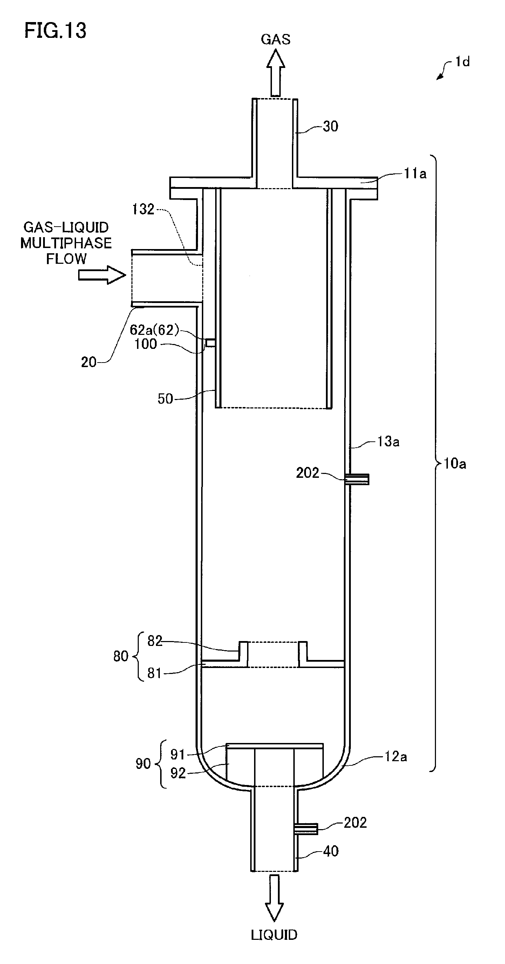

FIG. 13 is an exemplary schematic view illustrating the meridian cross section of a gas-liquid separator 1d according to a further modification of the first embodiment. A container 10a of the gas-liquid separator 1d illustrated in FIG. 13 includes a lid section that includes a top section 11a, and a container main body that includes a bottom section 12a and a body section 13a. The lid section and the container main body are connected by a flange coupling. The gas-liquid separator 1d is configured in the same manner as the gas-liquid separator 1 illustrated in FIG. 1 except for the above feature.

The gas-liquid separator 1d illustrated in FIG. 13 has the same effects as those of the gas-liquid separator 1 for the above reasons.

1-3. Gas-liquid separator according to second embodiment

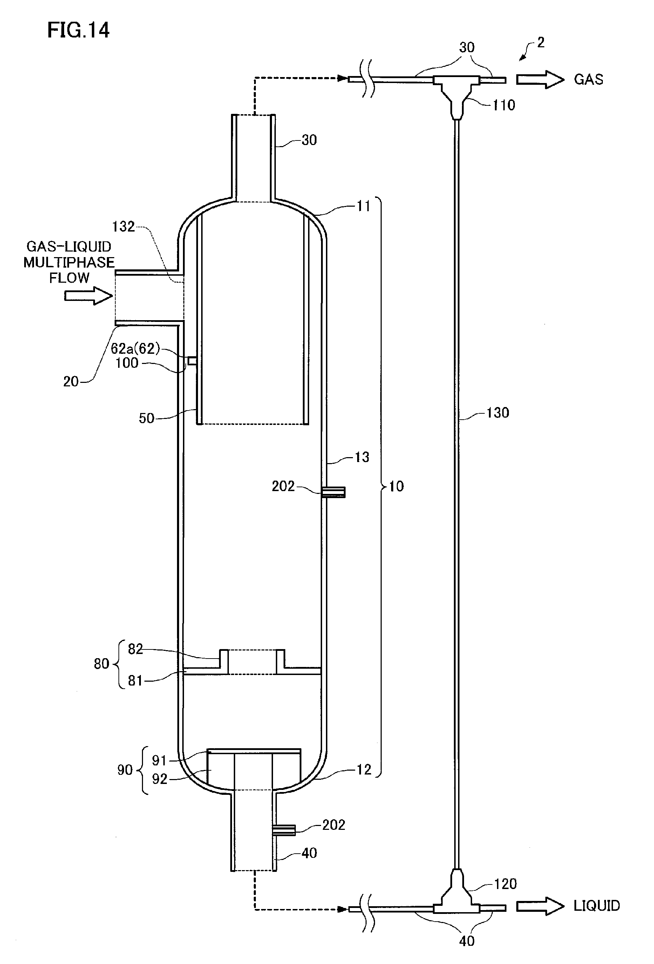

FIG. 14 is an exemplary schematic view illustrating the meridian cross section of a gas-liquid separator 2 according to a second embodiment. A configuration in which the gas-liquid separator 1 according to the first embodiment is combined with a droplet separator 110, a bubble separator 120, and a pipe 130 that connects the droplet separator 110 and the bubble separator 120 is described below as an example of the gas-liquid separator 2 according to the second embodiment. Note that the gas-liquid separator 2 according to the second embodiment may have a configuration in which the gas-liquid separator 1a, the gas-liquid separator 1b, the gas-liquid separator 1c, or the gas-liquid separator 1d is combined with the droplet separator 110, the bubble separator 120, and the pipe 130 that connects the droplet separator 110 and the bubble separator 120. Note that the same elements as those of the gas-liquid separator 1 according to the first embodiment are indicated by the same reference symbols (numerals), and detailed description thereof is omitted.

The gas-liquid separator 2 according to the second embodiment includes the droplet separator 110 that separates droplets from gas, the bubble separator 120 that separates bubbles from liquid, and the pipe 130 that connects the droplet separator 110 and the bubble separator 120. The droplet separator 110 is connected to the gas outlet pipe 30, and the bubble separator 120 is connected to the liquid outlet pipe 40.

The droplet separator 110 that separates droplets from gas may be a T-shaped pipe, a Y-shaped pipe, an inverted triangular pipe, or a funnel pipe that communicates with the lower side of the gas outlet pipe 30 via an opening having a cross-sectional area larger than that of the gas outlet pipe 30 so that the fluid velocity (flow rate) is reduced. It is preferable that the gas outlet pipe 30 disposed on the upstream side of the droplet separator 110 have a sufficient horizontal dimension so that separation of droplets from gas is promoted. It is preferable that the gas outlet pipe 30 disposed on the upstream side of the droplet separator 110 should be a horizontal pipe or a downwardly inclined pipe.

In the example illustrated in FIG. 14, the droplet separator 110 is a funnel pipe that communicates with the lower side of the gas outlet pipe 30 via an opening having a cross-sectional area larger than that of the gas outlet pipe 30. The droplet separator 110 guides liquid mist and a liquid phase that are mixed in gas that passes through the gas outlet pipe 30 to the pipe positioned below the gas outlet pipe 30, so that a situation in which liquid flows into the gas outlet pipe 30 that is positioned on the downstream side of the droplet separator 110 can be prevented.

The bubble separator 120 that separates bubbles from liquid may be an inverted T-shaped pipe, an inverted Y-shaped pipe, a triangular pipe, or a funnel pipe that communicates with the upper side of the liquid outlet pipe 40 via an opening having a cross-sectional area larger than that of the liquid outlet pipe 40 so that the fluid velocity (flow rate) is reduced. It is preferable that the liquid outlet pipe 40 disposed on the upstream side of the bubble separator 120 have a sufficient horizontal dimension so that separation of bubbles from liquid is promoted. It is preferable the liquid outlet pipe 40 disposed on the upstream side of the bubble separator 120 should be a horizontal pipe or an upwardly inclined pipe. In the example illustrated in FIG. 14, the bubble separator 120 is a funnel pipe that communicates with the upper side of the liquid outlet pipe 40 via an opening having a cross-sectional area larger than that of the liquid outlet pipe 40. The bubble separator 120 guides bubbles and a gas phase that are mixed in liquid that passes through the liquid outlet pipe 40 to the pipe positioned above the liquid outlet pipe 40, so that a situation in which gas flows into the liquid outlet pipe 40 that is positioned on the downstream side of the bubble separator 120 can be prevented.

As illustrated in FIG. 14, the gas-liquid separator 2 includes the pipe 130 that connects the droplet separator 110 and the bubble separator 120. This makes it possible to discharge liquid separated by the droplet separator 110 to the liquid outlet pipe 40, and discharge gas separated by the bubble separator 120 to the gas outlet pipe 30. In the example illustrated in FIG. 14, the gas-liquid separator 2 includes one droplet separator 110, one bubble separator 120, and one pipe 130. Note that the gas-liquid separator 2 includes a plurality of droplet separators 110, a plurality of bubble separators 120, and a plurality of pipes 130.

1-4. Other modifications

The gas-liquid separator 1, the gas-liquid separator 1a, the gas-liquid separator 1b, the gas-liquid separator 1c, and the gas-liquid separator 1d according to the first embodiment and the gas-liquid separator 2 according to the second embodiment may optionally include one or more detection short pipes for detecting the temperature, pressure, or the like, one or more short pipes for discharging fluid to the outside, or the like. In the examples illustrated in FIGS. 1, 6, 8, and 14, the gas-liquid separator 1, the gas-liquid separator 1a, the gas-liquid separator 1b, the gas-liquid separator 1c, and the gas-liquid separator 2 include connecting pipes 202 for detecting the position of the liquid surface inside the container 10 by pressure, the connecting pipes 202 being provided to the container 10 and the liquid outlet pipe 40. In the example illustrated in FIG. 13, the gas-liquid separator 1d includes the connecting pipes 202 for detecting the position of the liquid surface inside the container 10a by pressure, the connecting pipes 202 being provided to the container 10a and the liquid outlet pipe 40.

Note that a gas-liquid multiphase fluid separated by the gas-liquid separator 1, the gas-liquid separator 1a, the gas-liquid separator 1b, the gas-liquid separator 1c, and the gas-liquid separator 1d according to the first embodiment and the gas-liquid separator 2 according to the second embodiment may include gas and a plurality of types of liquid, for example. A gas-liquid multiphase fluid that includes gas and oil and/or water may suitably be separated by the gas-liquid separator 1, the gas-liquid separator 1a, the gas-liquid separator 1b, the gas-liquid separator 1c, and the gas-liquid separator 1d according to the first embodiment and the gas-liquid separator 2 according to the second embodiment. The gas-liquid separator 1, the gas-liquid separator 1a, the gas-liquid separator 1b, the gas-liquid separator 1c, and the gas-liquid separator 1d according to the first embodiment and the gas-liquid separator 2 according to the second embodiment exhibit a high gas-liquid separation efficiency when separating a multiphase fluid that flows at a stable flow rate (stationary state) and includes gas and a plurality of types of liquid, and may also be employed when separating a multiphase fluid that includes gas and crude oil or/water and is produced from a borehole (e.g., oilfield or gas field) (i.e., the pressure, the flow rate, and the gas-liquid ratio change to a large extent over time). Note that water included in a gas-liquid multiphase fluid may be an aqueous solution (e.g., salt water).

2. Experimental examples

In the following experimental examples, gas-liquid separation was implemented using the gas-liquid separator 1 according to the first embodiment.

The gas-liquid separator 1 used for the experiments had a configuration in which the diameter of the inner side surface of the body section 13 was 200 mm, the diameter of the outer side surface of the inner pipe 50 was about 165 mm, the distance between the inner side surface of the body section 13 and the outer side surface of the inner pipe 50 was about 17 mm, and the diameter of the inner side surface of the inlet pipe 20 in the vertical direction was 50 mm. The guide plate lower section 62 was provided on the outer side surface of the inner pipe 50 within an angular range of 90° from the position directly under the guide plate side section 61 when viewed from above. The width of the space 100 formed between the guide plate lower section 62 and the inner side surface of the body section 13 was about 5 mm.

The experiments were performed as follows. Specifically, the liquid outlet pipe 40 was closed using a ball valve. A water-nitrogen two-phase fluid prepared by mixing water and nitrogen gas at given flow rates was supplied via the inlet pipe 20. A volume Vl of liquid supplied within a time t for which the liquid surface increased to a given position below the lower end of the inner pipe 50 inside the container 10, and a volume S of liquid discharged via the gas outlet pipe 30 and separated (captured) by the droplet separator within the time t were measured. The above operation was repeated while changing the flow rates of water and nitrogen gas to measure the volume Vl and the volume S.

The flow rate Vn of nitrogen gas used for the water-nitrogen two-phase fluid was changed within the range of "0 m³/h < Vn < 300 m³/h". The flow rate Vh of water used for the water-nitrogen two-phase fluid was changed in four stages (i.e., 1 m³/h, 5 m³/h, 10 m³/h, and 15 m³/h).

The liquid in gas per total liquid was calculated by the following expression using the volume Vl and the volume S measured by the above operation.

$$\text{Liquid in gas per total liquid (\%)} = (\text{volume S} / (\text{volume S} + \text{volume Vl})) \times 100$$

Specifically, a low liquid in gas per total liquid indicates a high gas-liquid separation efficiency.

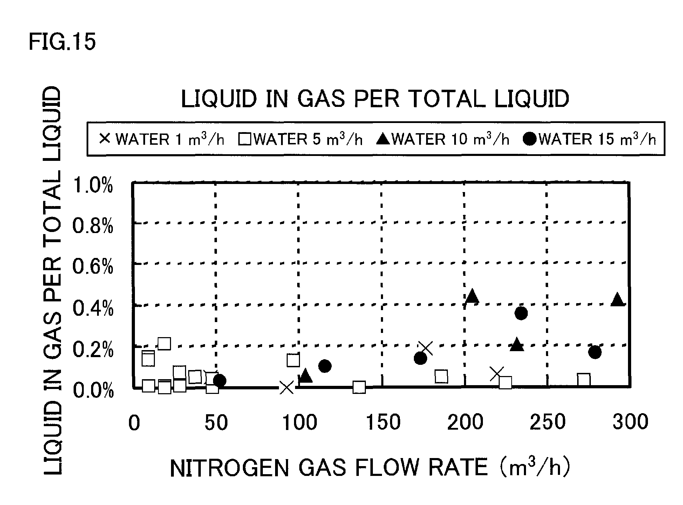

FIG. 15 is a graph illustrating the results for the liquid in gas per total liquid measured using the gas-liquid separator 1 according to the first embodiment. The horizontal axis indicates the flow rate of nitrogen gas used for the water-nitrogen two-phase fluid, and the vertical axis indicates the liquid in gas per total liquid. A symbol that indicates the measurement point indicates the flow rate of water used for the water-nitrogen two-phase fluid.

As illustrated in FIG. 15, the liquid in gas per total liquid was 1% or less irrespective of the measurement conditions.

This demonstrates that a gas-liquid multiphase fluid can be separated into gas and liquid with a high separation efficiency using a simple configuration by utilizing the gas-liquid separator 1 according to the first embodiment over a wide flow rate range and a wide gas-liquid ratio range.

3. Multiphase flow rate measurement device

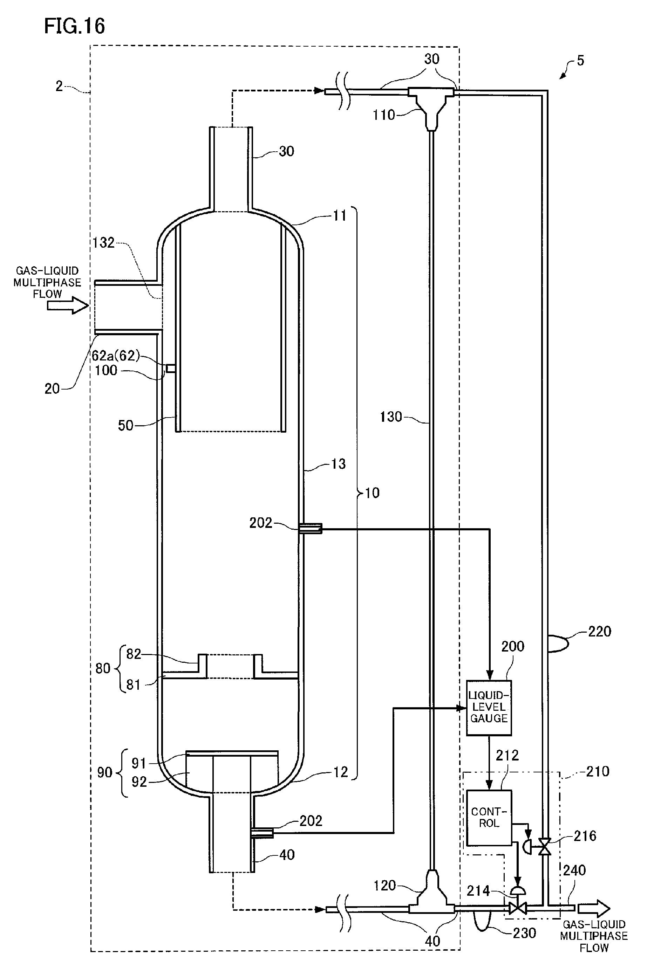

FIG. 16 is an exemplary schematic view illustrating the meridian cross section of a multiphase flow rate measurement device 5 according to one embodiment of the invention.

The multiphase flow rate measurement device 5 includes the gas-liquid separator 2, a liquid-level gauge 200 that measures the height of the liquid surface inside the container 10, a liquid level control means 210 that adjusts the height of the liquid surface inside the container 10 based on the measurement result of the liquid-level gauge 200, a gas flowmeter 220 that measures the flow rate of gas discharged via the gas outlet pipe 30, and a liquid flowmeter 230 that measures the flow rate of liquid discharged via the liquid outlet pipe 40. Note that the multiphase flow rate measurement device 5 may include the gas-liquid separator 1, the gas-liquid separator 1a, the gas-liquid separator 1b, the gas-liquid separator 1c, or the gas-liquid separator 1d instead of the gas-liquid separator 2.

The liquid-level gauge 200 detects the position of the liquid surface inside the container 10. In the example illustrated in FIG. 16, the liquid-level gauge 200 determines (measures) the position of the liquid surface based on the difference between the pressure detected using the connecting pipe 202 provided to the container 10 and the pressure detected using the connecting pipe 202 provided to the liquid outlet pipe 40.

The liquid level control means 210 adjusts the height of the liquid surface inside the container 10 based on the measurement result of the liquid-level gauge 200. In the example illustrated in FIG. 16, the liquid level control means 210 includes a controller section 212, a liquid level control valve 214, and a gas pressure control valve 216.

The controller section 212 controls the liquid level control valve 214 and the gas pressure control valve 216. The controller section 212 may have a known configuration, and may include a differential pressure transmitter that outputs a signal generated based on the difference between the pressures detected using two liquid-level gauges 200.

The liquid level control valve 214 is provided in the middle of the liquid outlet pipe 40, and limits the flow rate of liquid that flows through the liquid outlet pipe 40 under control of the controller section 212.

The gas pressure control valve 216 is provided in the middle of the gas outlet pipe 30, and limits the flow rate of gas that flows through the gas outlet pipe 30 under control of the controller section 212.

An example of the control process of the controller section 212 is described below. When the liquid-level gauge 200 has determined that the difference between the pressure detected using the connecting pipe 202 provided to the container 10 and the pressure detected using the connecting pipe 202 provided to the liquid outlet pipe 40 has become smaller than the lower-limit value of an allowable range that is set in advance, the controller section 212 returns the liquid surface to the allowable range by closing the liquid level control valve 214. When the liquid-level gauge 200 has determined that the difference between the pressure detected using the connecting pipe 202 provided to the container 10 and the pressure detected using the connecting pipe 202 provided to the liquid outlet pipe 40 has become larger than the upper-limit value of the allowable range, the controller section 212 lowers the liquid surface by closing the gas pressure control valve 216 to increase the pressure loss in the gas outlet pipe 30. This makes it possible to set the liquid surface within the allowable range. The flow rate measurement accuracy can be improved by setting the liquid surface within the allowable range.

The gas flowmeter 220 measures the flow rate of gas discharged via the gas outlet pipe 30. A volumetric flowmeter, a mass flowmeter, or the like may be used as the gas flowmeter 220. The gas flowmeter 220 may include a thermometer and a pressure gauge necessary for calculating the gas flow rate in a normal state, or functions of measuring the temperature and the pressure.

The liquid flowmeter 230 measures the flow rate of liquid discharged via the liquid outlet pipe 40. A volumetric flowmeter, a mass flowmeter, or the like may be used as the liquid flowmeter 230. A Coriolis meter may be used as the mass flowmeter. The liquid flowmeter 230 may include a liquid densitometer and a volumetric flowmeter.

Since the multiphase flow rate measurement device 5 utilizes the gas-liquid separator 2 that can separate a gas-liquid multiphase fluid that changes in flow rate and gas-liquid ratio to a large extent over time into gas and liquid with a high separation efficiency using a simple configuration, the multiphase flow rate measurement device 5 can accurately measure the flow rates of the gas and the liquid included in the gas-liquid multiphase fluid.

The multiphase flow rate measurement device 5 can also measure the water content in the gas-liquid multiphase fluid when the multiphase flow rate measurement device 5 can measure the density of liquid discharged via the liquid outlet pipe 40 (e.g., when using a Coriolis meter as the liquid flowmeter 230, or when the liquid flowmeter 230 includes a liquid densitometer and a volumetric flowmeter). For example, when using a Coriolis meter as the liquid flowmeter 230, the liquid density and the water content can be measured when bubbles are not mixed in liquid and the oil flow rate and the water flow rate are almost identical. The term "water content" used herein refers to the ratio of the water flow rate to the liquid flow rate.

For example, when liquid discharged via the liquid outlet pipe 40 includes water and oil, the water content WC is given by the following expression using the water density $\rho_W$, the oil density $\rho_O$, and the measured liquid density $\rho_L$.

$$WC = \frac{\rho_L - \rho_O}{\rho_W - \rho_O}$$

A value calculated by a predictive expression that uses temperature and pressure as variables, or a value measured by a density measurement device (not shown) provided outside the multiphase flow rate measurement device 5 may be used as the water density $\rho_W$ and the oil density $\rho_O$, for example.

The flow rates of gas, oil, and water included in a gas-liquid multiphase fluid can thus be measured using the multiphase flow rate measurement device 5, for example.

As illustrated in FIG. 16, the multiphase flow rate measurement device 5 may include a gas-liquid outlet pipe 240 that is provided in the subsequent stage of the gas flowmeter 220 and the liquid flowmeter 230, and discharges gas discharged via the gas outlet pipe 30 and liquid discharged via the liquid outlet pipe 40 in a mixed state. This configuration is effective when it is necessary to transport a gas-liquid multiphase fluid through one pipeline after measuring the flow rate of the gas-liquid multiphase fluid using the multiphase flow rate measurement device 5, for example.

Note that the above embodiments and the modifications thereof are merely examples, and the invention is not limited to the above embodiments and the modifications thereof. For example, a plurality of embodiments and/or a plurality of modifications may be appropriately combined.

The invention is not limited to the above embodiments. Various modifications and variations may be made without departing from the scope of the invention. For example, the invention includes various other configurations which are substantially the same as the configurations described in connection with the embodiments (e.g., a configuration having the same function, method, and results, or a configuration having the same objective and results). The invention also includes a configuration in which an unsubstantial section (element) described in connection with the embodiments is replaced with another section (element). The invention also includes a configuration having the same effects as those of the configurations described in connection with the embodiments, or a configuration capable of achieving the same objective as that of the configurations described in connection with the embodiments. The invention also includes a configuration in which a known technique is added to the configurations described in connection with the embodiments.

REFERENCE SIGNS LIST

1, 1a, 1b, 1c, 1d, 2: gas-liquid separator, 5: multiphase flow rate measurement device, 10, 10a: container, 11, 11a: top section, 12, 12a: bottom section, 13, 13a: body section, 20: inlet pipe, 30: gas outlet pipe, 40: liquid outlet pipe, 50: inner pipe, 60: guide plate, 61: guide plate side section, 61a, 61b: first guide plate, 62: guide plate lower section, 62a: second guide plate, 70, 70a: side-area leakage prevention plate, 72: lower-area leakage prevention plate, 80: baffle plate, 81: plate-like section, 82: tubular section, 90: vortex breaker, 91: vortex breaker main body, 92: leg section, 100: space, 110: droplet separator, 120: bubble separator, 130: pipe, 132: inlet opening, 200: liquid-level gauge, 202: connecting pipe, 210: liquid level control means, 212: controller section, 214: liquid level control valve, 216: gas pressure control valve, 220: gas flowmeter, 230: liquid flowmeter, 240: gas-liquid outlet pipe, 900: inlet pipe, 910: vertical cylinder

**Claims**

1. A gas-liquid separator that separates a gas-liquid multiphase fluid into gas and liquid, the gas-liquid separator comprising:

   a container that includes a top section, a bottom section, and a hollow body section that connects the top section and the bottom section;
   an inlet pipe that supplies the gas-liquid multiphase fluid to the container via an inlet opening formed in a side surface of the body section;
   a gas outlet pipe that discharges gas via the top section;
   a liquid outlet pipe that discharges liquid via the bottom section;
   an inner pipe that is hollow, an upper end of the inner pipe being connected to the top section, and a lower end of the inner pipe being open at a position lower than a lower end of the inlet pipe; and
   a guide plate that is provided on at least one of an outer side surface of the inner pipe and an inner side surface of the body section,
   the inner side surface of the body section and the outer side surface of the inner pipe being concentric when viewed from above;
   the inlet pipe extending toward a center axis of the body section when viewed from above;
   the guide plate including a guide plate side section that extends in a non-horizontal direction, and a guide plate lower section that extends in a non-vertical direction and is continuous with the guide plate side section;
   the guide plate side section being at least disposed on the inner side surface of the body section at a position on one side of the inlet opening, or on the outer side surface of the inner pipe at a position on one side of an area opposite to the inlet opening;
   the guide plate lower section being at least disposed on the outer side surface of the inner pipe at a position directly under an area opposite to the inlet opening and along the outer side surface of the inner pipe when viewed from above; and
   a space being at least partially formed between the guide plate lower section and the body section.

2. The gas-liquid separator according to claim 1,
   wherein the guide plate includes:

   a first guide plate that is provided on the outer side surface of the inner pipe or the inner side surface of the body section, and forms the guide plate side section; and
   a second guide plate that is provided on the outer side surface of the inner pipe, and forms the guide plate lower section.

3. The gas-liquid separator according to claim 1 or 2,
   wherein the guide plate lower section is formed so that a space is not continuously formed between the guide plate lower section and the inner side surface of the body section at least in an area from a position directly under the guide plate side section to an area directly under the inlet opening when viewed in an extension direction of the inlet pipe.

4. The gas-liquid separator according to any one of claims 1 to 3, further comprising:

   a lower-area leakage prevention plate that comes in contact with the guide plate lower section on a side opposite to the inlet pipe,

wherein a space formed between the body section and the guide plate lower section at least from a position directly under the guide plate side section to an area directly under the inlet pipe is closed by the lower-area leakage prevention plate when viewed in the extension direction of the inlet pipe.

5. The gas-liquid separator according to any one of claims 1 to 4,
   wherein a width of the space increases as a distance from an end of the guide plate lower section decreases.

6. The gas-liquid separator according to any one of claims 1 to 5, further comprising:

   a side-area leakage prevention plate that closes a space formed between the guide plate side section and the body section or the inner pipe.

7. The gas-liquid separator according to any one of claims 1 to 6, further comprising:

   a baffle plate that includes a plate-like section and a tubular section, the plate-like section being formed in the shape of a plate having a center opening at a position lower than the lower end of the inner pipe inside the container, and being held so that a periphery thereof adheres to the inner side surface of the body section, and the tubular section being formed above the plate-like section in the shape of a tube that communicates with the opening formed in the plate-like section.

8. The gas-liquid separator according to any one of claims 1 to 7, further comprising:

   a vortex breaker that is formed in the shape of a plate, a cone, or a pyramid, and covers an area directly over a connection section between the liquid outlet pipe and the bottom section.

9. The gas-liquid separator according to any one of claims 1 to 8, further comprising:

   a droplet separator that separates droplets from gas;
   a bubble separator that separates bubbles from liquid; and
   a pipe that connects the droplet separator and the bubble separator,
   the droplet separator being connected to the gas outlet pipe, and the bubble separator being connected to the liquid outlet pipe.

10. A multiphase flow rate measurement device comprising:

    the gas-liquid separator according to any one of claims 1 to 9;
    a liquid-level gauge that measures a height of a liquid surface inside the container;
    liquid level control means that adjusts the height of the liquid surface inside the container based on the measurement result of the liquid-level gauge;
    a gas flowmeter that measures a flow rate of gas discharged via the gas outlet pipe; and
    a liquid flowmeter that measures a flow rate of liquid discharged via the liquid outlet pipe.

FIG.1

GAS

30

132

11

A ——————————————————— A

GAS-LIQUID
MULTIPHASE
FLOW

62a(62)
100
20
50

13
202
10

82
80
81

91
90
92
12

202
40

LIQUID

FIG.2

FIG.3

FIG.4

50

61a(61)
60
62a(62)

FIG.5

50

20

61
60
62

FIG.6

GAS

30

11

132

A — A

GAS-LIQUID
MULTIPHASE
FLOW

62a(62)

20

50

13

202

10

82
80
81

91
90
92

12

202

40

LIQUID

FIG.7

FIG.8

FIG.9

1b

100
72
20
60 { 62a(62)
61a(61)
70
13
50
80
90

FIG.10

1c

100
72
20
60 { 62a(62)
61b(61)
70a
13
50
80
90

FIG.11

80

82

81

FIG.12

90

91

92

92

40

FIG.13

FIG.14

GAS-LIQUID MULTIPHASE FLOW

GAS

LIQUID

FIG.15

LIQUID IN GAS PER TOTAL LIQUID

X WATER 1 m³/h   □WATER 5 m³/h   ▲WATER 10 m³/h   ●WATER 15 m³/h

FIG.16

FIG.17A

900

910

FIG.17B

900

910

## INTERNATIONAL SEARCH REPORT

International application No.

PCT/JP2011/055248

### A. CLASSIFICATION OF SUBJECT MATTER
*B01D45/12*(2006.01)i, *B01D19/00*(2006.01)i, *B01D45/02*(2006.01)i, *G01F1/74* (2006.01)i

According to International Patent Classification (IPC) or to both national classification and IPC

### B. FIELDS SEARCHED

Minimum documentation searched (classification system followed by classification symbols)
B01D45/00-45/18, F22B37/00-37/78, B01D19/00, G01F1/74

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 8-290028 A (Tsutomu KAMATA), 05 November 1996 (05.11.1996), entire text; all drawings (Family: none) | 1-10 |
| A | JP 2004-52710 A (Hokuetsu Industries Co., Ltd.), 19 February 2004 (19.02.2004), entire text; all drawings (Family: none) | 1-10 |
| A | JP 2001-269524 A (Kamata Tecnas Co., Ltd.), 02 October 2001 (02.10.2001), entire text; all drawings & KR 10-2001-0093058 A | 1-10 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 May, 2011 (25.05.11) | Date of mailing of the international search report<br>07 June, 2011 (07.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/055248

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-262027 A  (Calsonic Kansei Corp.), 12 November 2009 (12.11.2009), entire text; all drawings (Family: none) | 1-10 |
| A | JP 2002-143618 A  (Mitsubishi Heavy Industries, Ltd.), 21 May 2002 (21.05.2002), entire text; all drawings (Family: none) | 1-10 |
| A | CD-ROM of the specification and drawings annexed to the request of Japanese Utility Model Application No. 59978/1991(Laid-open No. 2748/1993) (Miura Research Co.), 19 January 1993 (19.01.1993), entire text; all drawings (Family: none) | 1-10 |
| A | Microfilm of the specification and drawings annexed to the request of Japanese Utility Model Application No. 32463/1987(Laid-open No. 142507/1988) (Kawasaki Thermal Engineering Co., Ltd.), 20 September 1988 (20.09.1988), entire text; all drawings (Family: none) | 1-10 |

Form PCT/ISA/210 (continuation of second sheet) (July 2009)

**EP 2 543 424 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4596586 A
- JP 2001246216 A
- JP 2000317212 A
- US 4187088 A
- US 5526684 A

**Non-patent literature cited in the description**

- **G. JOEL RODGER.** Multiphase Flow Measurement Class 8110. Colorado Experiment Engineering Station Inc,